# EUROPÄISCHE PATENTSCHRIFT

(11) **EP 0 653 955 B1**
(45) Veröffentlichungstag und Bekanntmachung des Hinweises auf die Patenterteilung: **14.02.1996**
(21) Anmeldenummer: 93917666.5
(22) Anmeldetag: 28.07.1993
(51) Int. Cl.: B01D 51/10, B01D 47/08

(54) **VERFAHREN ZUR KONDITIONIERUNG VON RAUCHGASEN**
METHOD OF CONDITIONING FLUE GASES
PROCEDE POUR LE CONDITIONNEMENT DE GAZ DE FUMEES

(30) Priorität: 04.08.1992 DE 4225739
(43) Veröffentlichungstag der Anmeldung: 24.05.1995
(73) Patentinhaber: NOELL-KRC UMWELTTECHNIK GBMH, D-97080 Würzburg (DE)
(72) Erfinder: KERSTING, Mathias, D-97209 Veitshöchheim (DE); MENSING, Andreas, D-97204 Höchberg (DE)
(74) Vertreter: Werner, Hans-Karsten, Dr.
(86) Internationale Anmeldenummer: EP9301998
(87) Internationale Veröffentlichungsnummer: WO9403261

(56) Entgegenhaltungen:
- EP-A- 0 102 131
- EP-A- 0 266 571
- EP-A- 0 310 151
- US-A- 3 920 774
- US-A- 4 530 822

## Beschreibung

Gegenstand der vorliegenden Erfindung ist ein Verfahren zur Konditionierung von feststoffbelasteten Rauchgasen aus Müllverbrennungsanlagen für eine anschließende Rauchgasreinigung mit trockenen Additiven durch Einsprühen von Wasser in den Gasstrom.

Für die Rauchgasreinigung ist es im allgemeinen nötig, das Rauchgas zu konditionieren bezüglich Temperatur und Wasserdampfgehalt. Bei nassen Rauchgasreinigungsverfahren geschieht dieses Konditionieren beispielsweise in einem Quencher. Für die Rauchgasreinigung mit trockenen Additiven ist es üblich, in den Rauchgasstrom Wasser mit Hilfe von Sprühlanzen einzusprühen. Die anschließende Rauchgasreinigung mit trockenen Additiven bewirkt dann eine Entfernung saurer Bestandteile, wie HCl, HF, SO₂ und NOₓ. Sofern die Rauchgase durch Feststoffe belastet sind, werden diese im erheblichen Maße im Quencher angereichert und aus dem Verfahren ausgeschleust. Bei der Rauchgasreinigung mit trockenen Additiven werden die festen Verunreinigungen zusammen mit den trockenen Additiven aus dem Verfahren ausgeschleust und somit aus dem Rauchgas entfernt. Werden die Rauchgase durch Einsprühen von Wasser mittels Sprühlanzen konditioniert, führen hohe Feststoffbelastungen zu unerwünschten und störenden Anbackungen und Verbackungen, die dann auch bei der anschließenden Reinigung mit trockenen Additiven stören können. Solche Anbackungen und Verbackungen werden insbesondere dann beobachtet, wenn das Einsprühen des Wassers ungleichmäßig erfolgt und neben feinen Sprühnebeln auch größere Tröpfchen in den Rauchgasstrom gelangen.

Eine ungenügende Konditionierung der Rauchgase führt zu einer ungenügenden Reinigung. Eine Überdosierung des Wassers führt zu Anbackungen und Verbackungen der im Rauchgas befindlichen Feststoffe und kann darüber hinaus auch zu Verbackungen der trockenen Additive führen.

Die Erfindung hat sich die Aufgabe gestellt, ein Verfahren zur Konditionierung von feststoffbelasteten Rauchgasen aus Müllverbrennungsanlagen für die anschließende Rauchgasreinigung zur Verfügung zu stellen, welches bei der Rauchgasreinigung mit trockenen Additiven die beobachteten Störungen vermeidet und dennoch eine gute, gleichmäßige und gut steuerbare Konditionierung gewährleistet.

Diese Aufgabe kann überraschend gut gelöst werden dadurch, daß das Wasser durch eine vorgeschaltete Sprühtrocknungsanlage mit einem rotierenden Drehzerstäuber in den Gasstrom eingesprüht wird.

Sprühtrocknungsanlagen sind bisher ausschließlich dafür eingesetzt worden, Lösungen oder Dispersionen von Feststoffen einzutrocknen. Die Sprühtrocknung ist eine relativ aufwendige aber schonende Methode zum Trocknen und wird daher vor allem zum Eintrocknen hochwertiger und temperaturempfindlicher Feststoffe verwendet. Darüber hinaus sind Sprühtrocknungsanlagen auch schon verwendet worden für die quasi-trockene Rauchgasreinigung, indem Lösungen oder Dispersionen von Absorptionsmitteln mit Wasser versprüht wurden. Am Ende des Sprühturms wurde dann ein wieder eingetrocknetes Absorptionsmittel abgetrennt, welches zusätzlich die zu entfernenden Verunreinigungen des Rauchgases enthält. Sprühtrocknungsanlagen sind bisher aber nicht dafür verwendet worden, Rauchgase zu konditionieren, da der apparative und verfahrenstechnische Aufwand viel zu hoch erschien. Überraschenderweise hat sich jetzt jedoch herausgestellt, daß bei feststoffbelasteten Rauchgasen aus Müllverbrennungsanlagen Anbackungen und Verbackungen vermieden werden können und dennoch eine einwandfreie, reproduzierbare und gut steuerbare Konditionierung stattfindet.

Die anschließende Rauchgasreinigung erfolgt durch Einsprühen von trockenen Additiven. Für die Rauchgasreinigung kommen insbesondere Alkali- und Erdalkalihydroxide in Frage. Es können aber auch andere Absorptionsmittel, insbesondere Aktivkohle, als trockene Additive eingesetzt werden. Prinzipiell ist es natürlich auch möglich, feststoffbelastete Rauchgase aus Müllverbrennungsanlagen erfindungsgemäß zu konditionieren und danach mit trockenen Additiven zu versetzen und gegebenenfalls naß weiter zu reinigen. Dadurch ist es möglich, die Feststoffe des Rauchgases in trockener Form aus dem Rauchgas abzutrennen.

Bei Sprühtrocknungsanlagen können prinzipiell alle üblicherweise für die Sprühtrocknung und insbesondere die Rauchgasreinigung eingesetzten Sprühtrocknungsanlagen mit rotierenden Drehzerstäubern eingesetzt werden, da diese eine besonders gute und gleichmäßige Verteilung der flüssigen Phase im Gasstrom ermöglichen.

Sprühtrocknungsanlagen mit rotierendem Sprühzerstäuber sind ursprünglich entwickelt worden für die Gewinnung von Milchpulver, werden jedoch auch im erheblichen Umfang für die quasi-trockene Rauchgasreinigung eingesetzt. Bei feststoffbelasteten Rauchgasen aus Müllverbrennungsanlagen kann jedoch dieses Verfahren zu Störungen und unbefriedigenden Ergebnissen führen.

Gegenstand der vorliegenden Erfindung ist somit zunächst das Verfahren zur Konditionierung von feststoffbelasteten Rauchgasen aus Müllverbrennungsanlagen für eine anschließende Rauchgasreinigung mit trockenen Additiven durch Einsprühen von Wasser in den Gasstrom, dadurch gekennzeichnet, daß das Wasser durch eine vorgeschaltete Sprühtrocknungsanlage mit einem rotierenden Drehzerstäuber in den Gasstrom eingesprüht wird. Darüber hinaus ist Gegenstand der Erfindung die Verwendung von Sprühtrocknungsanlagen mit rotierendem Drehzerstäuber für die Konditionierung von feststoffbelasteten Rauchgasen aus Müllverbrennungsanlagen für eine anschließende Rauchgasreinigung mit trockenen Additiven durch Einsprühen von Wasser in den Gasstrom.

Die anschließende Rauchgasreinigung, beispielsweise durch Einblasen von trockenen Alkali- und Erdalkalihydroxiden, wird erfindungsgemäß wesentlich zuverlässiger und effizienter.

Der scheinbar übertrieben hohe apparative und prozeßtechnische Aufwand einer Sprühtrocknungsanlage nur für die Konditionierung der Rauchgase führt im Endeffekt jedoch zu derartig verbesserten Ergebnissen, daß die Gesamtanlage besser und wirtschaftlicher arbeitet.

Ein entscheidender Vorteil ist die verbesserte Sicherheit des Verfahrens, denn es arbeitet flexibler, wenn mehr oder weniger Wasser erforderlich ist, oder wenn mehr oder weniger Wasser zugeführt wird. Es gibt keine abrupte Unterbrechung sondern nur ein langsames Anwachsen oder langsames Absinken der zugeführten Wassermenge, die in das Rauchgas eingebracht wird. Es ist deshalb auch einfacher, das Verfahren zu regeln. Sprühlanzen neigen dazu zu verstopfen und dann plötzlich die Wasserzufuhr zu unterbrechen. Dies führt zu schwerwiegenden Störungen des Verfahrens.

Eine typische Sprühtrocknungsanlage, die auch für abrasive wäßrige Flüssigkeiten benutzt werden kann, ist in US-Patent 4,530,822 beschrieben und wird beispielsweise von der Firma NIRO verkauft. Diese Vorrichtungen können auch für die vorliegende Erfindung eingesetzt werden.

## Patentansprüche

1. Verfahren zur Konditionierung von feststoffbelasteten Rauchgasen aus Müllverbrennungsanlagen für eine anschließende Rauchgasreinigung mit trockenen Additiven durch Einsprühen von Wasser in den Gasstrom, dadurch gekennzeichnet, daß das Wasser durch eine Sprühtrocknungsanlage mit einem rotierenden Drehzerstäuber in den Gasstrom eingesprüht wird.

2. Verwendung von Sprühtrocknungsanlagen mit rotierendem Drehzerstäuber für die Konditionierung von feststoffbelasteten Rauchgasen aus Müllverbrennungsanlagen für eine anschliessende Rauchgasreinigung mit trockenen Additiven durch Einsprühen von Wasser in den Gasstrom.

## Claims

1. A process for the conditioning of flue gases from incinerating plants polluted with solids for subsequent flue gas purification with dry additives by spraying water into the gas stream, characterized in that said water is sprayed into the gas stream through a spray drying installation having a rotating atomizer.

2. The use of spray drying installations having a rotating atomizer for the conditioning of flue gases from incinerating plants polluted with solids for subsequent flue gas purification with dry additives by spraying water into the gas stream.

## Revendications

1. Procédé de conditionnement de gaz de fumée chargés de matières solides et provenant d'usines d'incinération d'ordures ménagères, en vue d'une purification ultérieure des gaz de fumée avec des additifs secs, par pulvérisation d'eau dans le flux de gaz, caractérisé en ce que l'eau est pulvérisée dans le flux de gaz au moyen d'un dispositif de séchage par pulvérisation avec un vaporisateur rotatif en mouvement.

2. Utilisation de dispositifs de séchage par pulvérisation avec un vaporisateur rotatif en mouvement pour le conditionnement de gaz de fumée chargés de matières solides et provenant d'usines d'incinération d'ordures ménagères, en vue d'une purification ultérieure de ces gaz de fumée avec des additifs secs, par pulvérisation d'eau dans le flux de gaz.
